# EUROPEAN PATENT SPECIFICATION

(11) **EP 2 718 583 B1**
(45) Date of publication and mention of the grant of the patent: **30.03.2016**
(21) Application number: 12737323.1
(22) Date of filing: 11.06.2012
(51) Int. Cl.: F16D 55/228, B60T 13/74, F16D 121/24, F16D 125/40

(54) **ELECTRONIC PARK BRAKE**
ELEKTRONISCHE PARKBREMSE
FREIN DE STATIONNEMENT ÉLECTRONIQUE

(30) Priority: 13.06.2011 GB 201109871
(43) Date of publication of application: 16.04.2014
(73) Proprietor: TRW Limited, Solihull, West Midlands B90 4AX (GB)
(72) Inventor: STONE, Jay, Bromsgrove Worcestershire B60 3EA (GB); HEALEY, Guy Charles, Upminster Essex RM14 1UT (GB); CONVERY, Andrew Timothy, Belbroughton Nr Stourbridge West Midlands DY9 9ST (GB); DE COOPER JONES, Mark, Redditch Worcestershire B97 5NE (GB)
(74) Representative: Tranter, Andrew David
(86) International application number: PCT/GB2012/051318
(87) International publication number: WO 2012/172317

(56) References cited:
- EP-A2- 1 703 165
- EP-B1- 1 687 547
- US-A1- 2007 209 887

## Description

This invention relates to an electronic park brake for a vehicle, and to a service brake which incorporates an electronic park brake.

In the context of this application, a service brake is a main brake that is used to slow or stop of a moving vehicle during normal driving. In a modern vehicle these are usually hydraulically controlled and rely on hydraulic pressure in a circuit to move a piston which forces a brake pad onto a disc that rotates with the wheel of the vehicle. Braking is achieved by friction between the pad and disc, increasing in effectiveness as the clamp load applied across the disc increases, with energy being primarily dissipated as heat. In the context of this specification an electronic park brake is an additional brake that can be engaged and released when the vehicle principally is stationary to prevent it inadvertently moving, for instance if left parked on a slope. The parking brake should be able to apply a high enough clamp load across the disc to hold the vehicle independent of the pressure held in the hydraulic circuit, which would typically drop when the engine of the vehicle is switched off, and once engaged should remain engaged until released by the driver independent of any hydraulic or electric supply to the brake.

In a simple arrangement, a service brake will comprise a "floating calliper" design which has a single piston on one side of the disc that presses against the disc when the driver presses the brake pedal. This creates a reaction force that pulls or slides the calliper to bring the pad on the other side of the disc into contact with the disc. In an alternative arrangement, often found on high performance sports cars, the service brake will comprise a fixed calliper that straddles a disc and does not move unlike a floating calliper. The calliper supports a minimum of two opposed pistons, one inboard of the disc and one outboard of the disc. When the driver presses the brake pedal, the two pistons advance towards the disc and in turn press opposing brake pads into engagement with the disc. In a modification, the single piston on each side may be replaced with a pair of pistons of each side.

Fixed calliper designs are preferred over floating calliper designs for sports vehicles because they are generally stiffer with less expansion under pressure and so provide a more responsive and consistent brake feel, with a shorter pedal travel and better feedback. However, they are more complex because they need to pass hydraulic fluid to both sides of the brake via a separate pipe or drilling within the housing.

A fixed calliper service brake may be provided at each wheel of the vehicle. In addition the two rear wheels of the vehicle will be provided with separate parking brakes. These operate independently of the service brakes, and are typically of a more simple design as they do not have to provide fine control or high braking forces. A disadvantage of this arrangement is that the need for separate service brakes and parking brakes at each wheel increases the un-sprung mass of the vehicle, and they also look somewhat unsightly.

EP 1 687 547 B1 teaches a combined park brake and service brake which uses the hydraulic pressure of the service brake system to apply the park brake. The applicant has concerns about the integrity of such a system when used as a park brake as it will not function effectively in the event of a drop in hydraulic pressure, since it uses hydraulic pressure to advance the brake pistons onto the brake disc before an electric motor locks the pistons in place.

According to a first aspect the invention provides an electronic parking brake for a vehicle comprising:
a calliper body that supports at least one inboard piston and at least one opposing outboard piston,
inboard and outboard brake pads respectively associated with the at least one inboard and outboard piston, spaced apart so as to define a gap within which can be located a brake rotor so that the inboard pad faces ones side of the rotor and the opposed outboard pad faces the other side of the rotor, and
an actuator which is connected to the at least one inboard piston through a first drive train and to the at least one outboard piston through a second drive train such that operation of the actuator causes movement of the drive trains and in turn movement of the pistons relative to the calliper body, the second drive train including a limiter means that limits the maximum force that can be transmitted from the actuator to the outboard piston.

The provision of the limiter means enables the outboard brake pad to be moved up to the rotor, typically a brake disc, by the outboard piston when the brake is applied and then to cause the piston to apply a clamp load to the disc (through the pad) which increases only up to the predetermined maximum level regardless of whether the actuator would otherwise apply a greater clamp load if left unchecked. This is especially suited to fixed calliper designs where the relative position of the outboard piston and the disc is not known. Moving the outboard pad up to the disc before clamping with the inboard pad with a predetermined maximum to achieve a predetermined clamp and then applying the inboard pad to achieve the full clamp load ensures that the disc does not bend excessively as would happen if only the inboard pad or the outboard pad is moved.

The first drive train may have no such limiter means, or a limiter means that limits the clamp load that can be applied by the inboard piston at a much higher load. Thus, the bulk of the clamp load will be applied by the actuator through the inboard piston than is applied by the actuator to the outboard piston.

The brake may include a park brake controller which controls operation of the actuator, in turn controlling the movement of the inboard and outboard pistons. This may be located remotely from the brake. In its simplest form the controller will typically comprise an electronic control unit which receives a signal from the park brake switch to apply the brake pads.

The park brake controller may be arranged to drive the actuator until fully engaged positon when a predetermined clamp load has been applied across the rotor. The controller may comprise an electronic control unit which receives a signal from the park brake switch to apply the brake pads and in response applies drive to the actuator until a desired clamp force has been achieved, the controller includes means for receiving a measure of the current drawn by the actuator (where the actuator is an electric actuator), means for converting the current into an estimate of clamp force and means for comparing this with the desired clamp load.

The park brake controller may apply a clamp load which varies with the gradient on which the vehicle is parked. It may apply a higher clamp load when the vehicle is on a steep gradient and a lower clamp load on a shallow gradient.

The calliper may comprise a fixed calliper.

The first drive train may include a rotary to linear motion converter that converts rotary motion of an output shaft to a linear displacement of the at least one inboard piston. This may comprise a spindle which is coupled, directly or indirectly, to an output shaft of the motor and a nut which moves axially along the spindle as the spindle rotates, the movement of the nut generating linear movement of the piston.

The nut may be decoupled from the piston so that it can move axially relative to the piston. In this case the nut will press the piston towards the rotor but will not pull it away from the rotor. Alternatively it may be axially restrained relative to the piston so that it will push the piston and also pull it away from the rotor. It may be connected to the piston through a lost motion coupling such that when initially retracted the nut can move through a limited distance before it starts to retract the piston on further movement.

The nut may be located within a recess in the underside of the piston.

The actuator may comprise a motor, which may be fixed to the inboard side of the calliper. This is convenient as there is generally more space to locate a motor on this side which faces away from the road wheel of the vehicle. The second drive train may then include a drive shaft that spans the rotor from the inboard to the outboard side of the calliper

The first drive train may engage directly with the output shaft of the actuator or spindle.

Similarly, the second drive train may include a rotary to linear motion converter that converts rotary motion of an output shaft to a linear displacement of the at least on inboard piston. This may comprise a spindle which is coupled, directly or indirectly, to an output shaft of the motor and a nut which moves axially along the spindle as the spindle rotates, the movement of the nut generating linear movement of the piston.

The electric park brake apparatus may be arranged such that generally the outboard piston will apply a force to the rotor before the inboard piston. The second drive train may be higher geared than the first drive train, so that for a given rotation of the motor the at least one outboard piston may advance by a greater distance than the inboard piston. This will generally ensure that the outboard pad engages the rotor before the inboard pad. This can be achieved through gearing in either of the first drive trains or second drivetrains or both. Indeed, the assembly may be arranged so that the outboard pad always engages the disc before the inboard pad during a park brake operation.

The second drive train may be driven by the motor through a part of the first drive train.

The gearing of the second drivetrain may be chosen so that the inboard and outboard spindles and nuts and pistons are identical, reducing the number of unique parts required for production. This can be achieved through use of an idler gear to ensure that the inboard and outboard spindles rotate in opposing directions for a given rotation of the motor.

The brake may be arranged such that with the outboard piston pressing the outboard pad against the brake disc and the inboard piston pressing the inboard pad against the disc, at least a part of the force reacted by the outboard piston is earthed out to the calliper rather than through the second drive train onto the actuator.

The limiter preferably limits the clamp load that can be applied by the outboard piston by the actuator to a level below the total clamp load that is to be applied across the rotor by both the inboard and outboard pistons when the parking brake is fully applied. It may limit the load to a level considerably below the full clamp load, perhaps to a level that exceeds slightly the maximum expected friction load in the second drive train. In effect this will mean the outboard piston is advanced until it starts to load the rotor and the stops advancing, whereafter the inboard piston continues to advance and apply an increasing load.

The limiter means may comprise a clutch having an input side connected to the actuator and an output side connected to the piston, the clutch limiting the torque that can be transmitted from the input side to the output side. In practice, the clutch will slip when the maximum torque to be transmitted is reached, so that as the actuator continues to move the torque applied no longer increases but remains generally constant.

The clutch may comprise a ball detent type clutch. This may comprise a drive plate and an opposing reaction plate which are free to rotate about a common axis, a ball bearing being located between the opposed plates in an annular groove in the drive plate which is located concentrically around the common axis, and a spring which acts between the ball bearing and the reaction plate to press the ball into the groove, the groove including a series of changes in width or depth around its length to form a series of adjacent pockets into which the bearing sits thereby to lock the reaction plate and drive plate together preventing relative rotation until a torque is applied across the plates sufficient to compress the spring and cause the ball to move out of the pocket into an adjacent pocket, thereby causing the clutch to slip when the maximum torque is reached.

The groove and pockets may be asymmetric with regards to the torque limiting feature in both rotational directions.

The spring force may be adjustable, perhaps by an adjustable screw pressing down on the end of the spring furthest from the ball bearing.

The clutch may be set to limit the maximum torque to equal a desired clamp load between the inboard pad and the disc. This could be a relatively low load, so that the clutch effectively stops the piston advancing or applying high torque loads as soon as the pad starts to press on the disc. Once the pad is so located, further clamping is all achieved using the inboard pad, with the outboard pad simply resisting the load.

Most conveniently the clutch may be located on the inboard side of the calliper, preferably adjacent the actuator. Again, this helps with packaging but may also help with cooling. Space permitting, it may also be located on the outboard side.

The second drive train may include a decoupling device such as a sprag clutch in series with the limiting means. This can be used to ensure that there is no drive transmitted from the actuator to the outboard piston when the brake is released should this be desired.

The brake rotor may comprise a brake disc of a service brake assembly of the vehicle. Sharing a brake disc in this manner reduces the overall unsprung weight of the vehicle. The disc can be a floating disc by which we mean it can move axially relative to the hub the supports the disc.

According to a second aspect the invention provides a combined service brake and parking brake assembly which comprises an electronic park brake according to the first aspect of the invention and an inlet for hydraulic fluid into a closed spaced behind at least one inboard piston and at least one outboard piston whereby in use hydraulic pressure introduced into the closed spaced from a hydraulic brake circuit acts on the underside of each piston to push the piston towards the brake disc so as to apply the service brake.

A seal should be provided around the pistons to prevent the hydraulic fluid escaping between the piston and the calliper body. This may be a relatively rigid annular seal that provides a roll -back function, assisting in drawing the piston back away from the disc whenever the service brake or park brake pressure is released so that the piston does not need to be actively pulled back. Using the roll back is desirable as it helps ensure the piston retracts by a desired, consistent, amount each time.

The combined assembly may comprise a four pot (or greater) assembly, having at least two inboard pistons and at least two outboard pistons. The calliper may comprise a fixed calliper.

The assembly may further include a disc.

The combined assembly may employ the same pistons to apply pressure during a service brake operation or a park brake operation, yet park brake operation can be maintained independent of any hydraulic pressure in the service brake. Alternatively, the park brake may have its own pistons that are not used for the service brake function, carried by a common calliper with the service brake pistons. In each case, a single common calliper body may be provided that houses the pistons.

There will now be described, by way of example only, two embodiments of the present invention of which:
Figure 1 is a view of an embodiment of a parking brake assembly according to an aspect of the invention;
Figure 2 is a schematic view of the assembly of Figure 1 when operating as a service brake;
Figure 3 is an illustration of a clutch that is included in the second drive train of the assembly of Figure 1;
Figure 4 shows an alternative in which a decoupling sprag clutch is provided;
Figure 5 shows an embodiment of a combined service brake and parking brake according to the present invention; and
Figure 6 shows in more detail the spindle and nut that are used to drive the inboard piston towards the brake rotor, the outboard arrangement being the same.

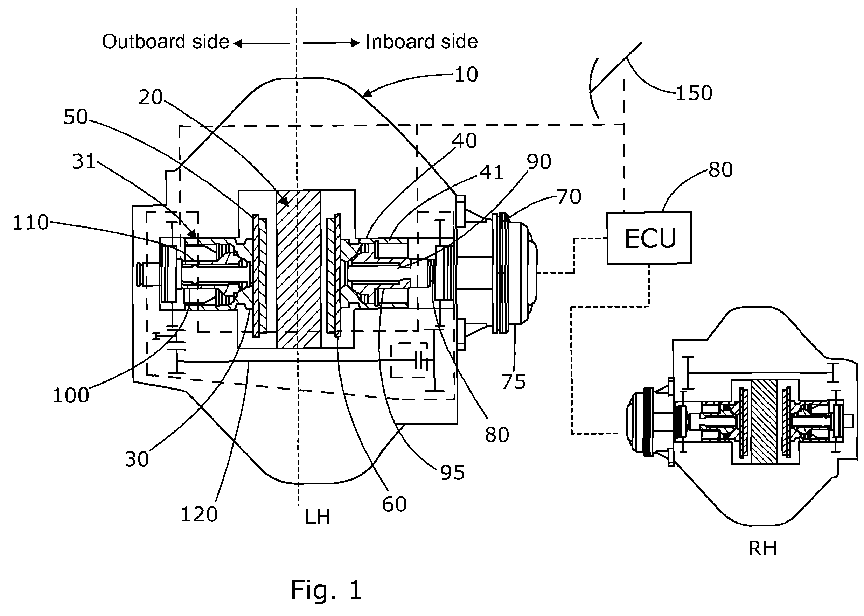

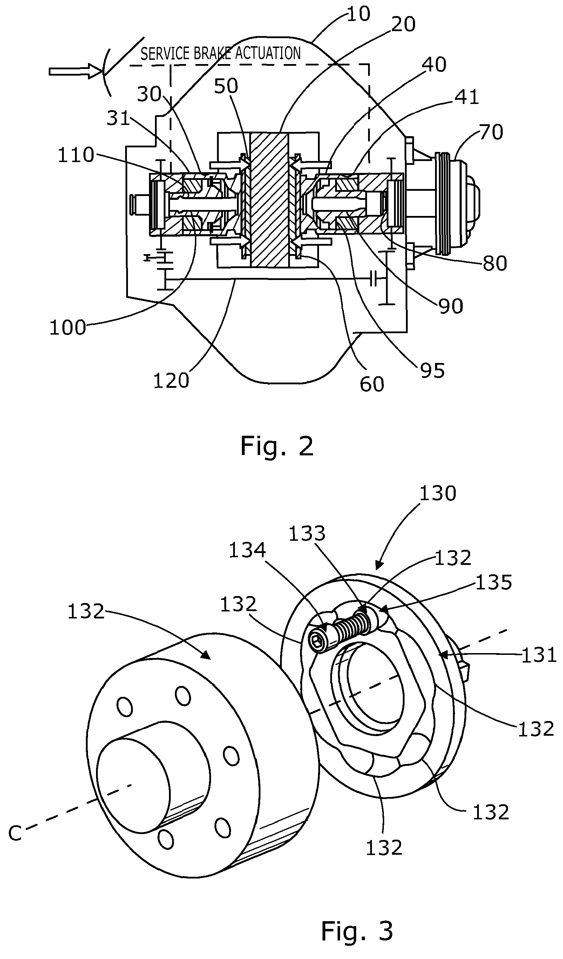

Figure 1 shows part of a park brake assembly suitable in particular for a high performance sports vehicle. The assembly comprises a fixed calliper body 10 which in use is bolted to a wheel carrier (not shown) adjacent a wheel hub (also not shown) and inboard of a road wheel (not shown) of the vehicle. A brake rotor, in which example a disc of mild steel or perhaps a ceramic composite material, is also fixed to the wheel carrier in such a position that an outer perimeter portion of the disc sweeps an internal space defined by the calliper in a known manner. The relative position of the calliper body 10 and disc 20 is shown in the schematic diagram of Figure 2 of the accompanying drawings.

The calliper body 10 houses an inboard piston 40 and an outboard piston 30. Each piston is located in a bore 41, 31 of the calliper body 10 so that it can move along the bore. The open end of the piston is sealed by an optional roll back seal, to define a closed spaced within the bore behind the piston.

A brake pad 50 is sandwiched between the inboard piston and the brake disc and is pushed against the disc during braking by the piston and free to move away from the disc surface as the piston is retracted. The same arrangement is provided with a pad between the outboard piston 30 and the disc 20. The pads are conventional high friction brake pads with a rigid metal backing plate supporting a layer of high friction wear material.

The parking brake assembly also includes an actuator 70 which connects to the inboard piston 40 and the outboard piston 30 through a drive train and an electronic controller 80 which causes the actuator to move the pistons towards the disc independent of the hydraulic circuit to provide the required park brake function.

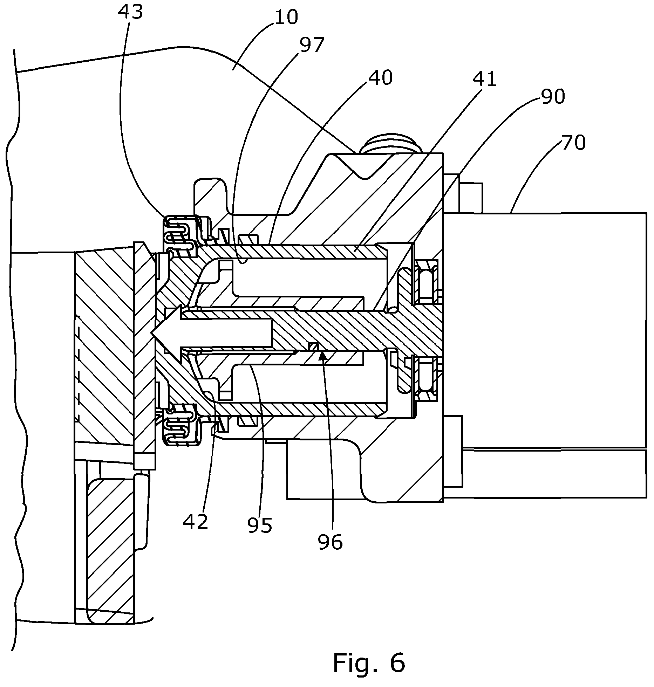

The actuator comprises an electric motor 70 housed in a housing 75 that is fixed to, or integral with, the calliper. It is located on the inboard side of the calliper body 10. The motor 70 includes an output shaft 80 that is connected directly to a spindle 90 via a splined interface. This can best be seen in Figure 6 of the drawings. The spindle 90 is located within the bore 41 in a space behind the inboard piston 40. One end of the spindle 90 carries a nut 95 and end face of which is located behind a seat 42 machined into the underside of the crown of the piston 40. The spindle 90 rotates at the same speed as the motor. The spindle 90 is provided with an anti-back off thread 96 along its length and threaded onto this is the nut 95 with a complimentary thread. The nut 95 is a sliding fit within a recess formed inside the piston 40 but is keyed so it cannot rotate. Rotating the spindle 90 in one direction moves the nut 95 along the spindle towards the seat and eventually it contacts the seat 42 and drives the piston towards the rotor 20. Rotating it the other way retracts the nut 95 away from the seat so that it leaves the piston free to retract. The anti-back off thread ensures that any load applied to the nut 95 from the piston 40 does not cause the nut to move along the spindle.

The motor 70 is also connected through a second drivetrain including a plurality of gear wheels to a further spindle 100 associated with the outboard piston 30. The spindle spindle 100 is located at one end in a seat in the calliper body within the closed space 31 and at the other in a seat on the underside of the crown of the outboard piston 30. A threaded nut 110 is engaged with a complimentary thread on the spindle 100.

The second drivetrain includes a drive shaft 120 that crosses from the inboard to outboard sides of the calliper body and a limiter means which in this embodiment comprises a clutch assembly 130 connects the actuator 70 to the spindle of the outboard piston 30. The clutch assembly 130 allows the force (actually the torque in this embodiment) of the motor to be transmitted to the spindle 100 only up to a preset torque level, thereafter allowing some slippage between the motor and spindle 100 so the motor can keep rotating.

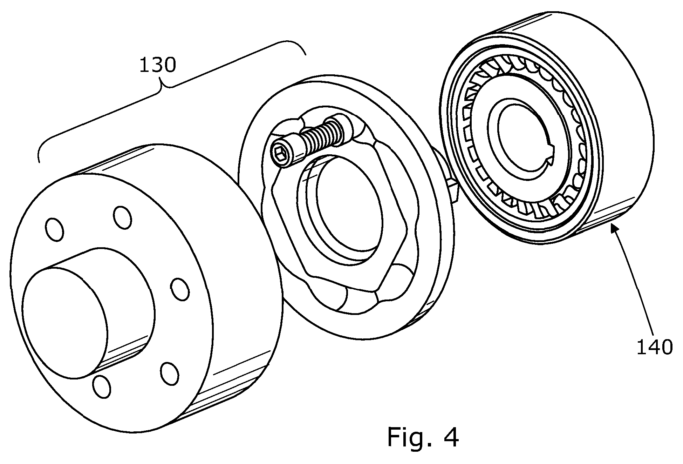

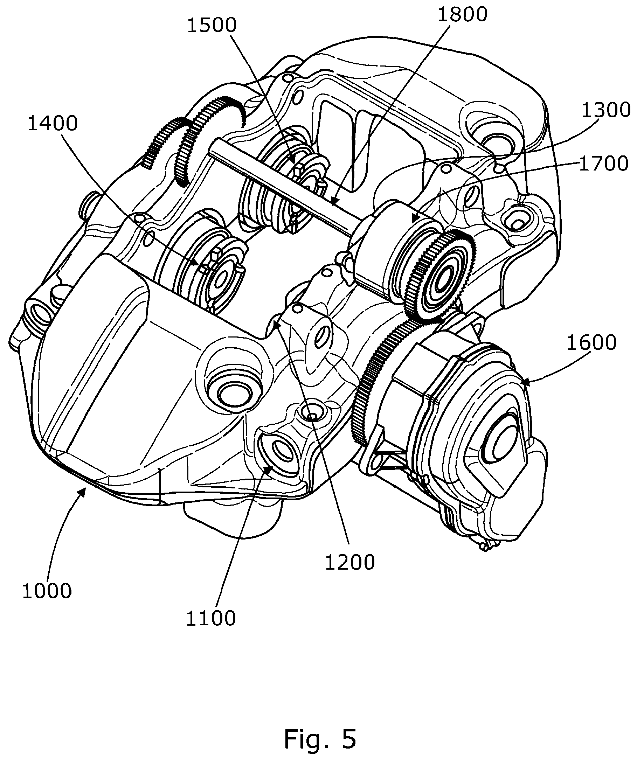

An exemplary clutch is shown in Figure 4 of the drawings. It comprises two opposing circular plates- a drive plate 131 and a reaction plates 132, both of which are located about a common central axis of rotation C. A compound three-dimensional annular groove 133 is formed in the face of the drive plate 131 that faces the reaction plate that forms a series of spaced pockets 132. A ball bearing 135 is located in a pocket by a compression spring 133 that is fixed at one end to the drive plate by an adjustable screw 134. The drive plate 132 is secured to a part of the second drive train connected to the actuator and the reaction plate is secured to a part of the second drive train that is connected to the outboard pistons. If preferred the drive plate and the reaction plate could be connected the other way round. As the motor 70 rotates the drive plate rotates, and the ball bearing which is located in a pocket drags that reaction plate around with it. When the rotation of the reaction plate is resisted by a sufficient force, the spring 133 compresses and the ball bearing 135 skips from one pocket to the next. An optional decoupling device such as a sprag clutch 140 may be provided between the clutch and part of the second drive train as shown in Figure 5. The geometry may be different in each direction to give different maximum torque profiles for each direction.

The motor 70 is controlled by a controller which receives an input signal from a park brake pedal or switch 150. In use, with the parking brake initially released and then being applied, the controller 80 receives the apply signal from the brake pedal. It then causes the motor 70 to operate in a direction that rotates the spindles 90,100 to move the pistons 30, 40 towards the disc 20. Both the inboard and outboard pistons initially move, but the outboard one moves faster due to the gearing in the second drivetrain and so the outboard pad contacts the disc 20 first. As the motor 70 continues to rotate, the outboard pad presses on the disc until the torque limit of the clutch is reached. At this point, the clutch assembly 130 will prevent the pad moving further as the reaction plate ceases to move, the drive plate continuing to rotate as the ball bearing moves from pocket to pocket. The motor 70 continues to rotate to press the inboard pad against the disc 20 to the required clamp force. This force is reacted by the outboard pad, the outboard piston taking the load through the nut on the underside of the piston. At the required force the motor is switched off by the controller. The brake remains locked on even if electric power is lost due to the reaction of the nuts below the pistons.

When the electronic park brake is released, the controller 80 receives a signal from the pedal or switch and causes the motor 70 to turn in the opposite direction. This drives the nut 95 back along the spindle 90 away from the underside of the outboard piston, leaving the piston free to retract. The retraction is assisted by providing a circlip 97 or other protrusion on the inside wall of the piston on the opposite side of the nut 95 to the seat 42, such that the nut 95 will engage the circlip 97 and thereafter draw the piston back with the nut. The location of the circlip can be seen in Figure 6.

The actuator assembly and control unit 80 includes a mechanism which enables the pads to be set at an optimum distance from the disc. For the outboard pad the motor rotates to move the nuts by an amount that is a function of the inner pad gap and the drive train gearing. The amount of retraction generally be controlled by the roll back of the piston seals, the sprag clutch and the slip clutch.

In this design the outboard nut is free to retract until the actuator stops. The clutch system decouples the gear train once the outboard piston has hit the end stop. This is normally only required during maintenance mode. With the nut retracted the piston is free to move and the roll back via the service brake seal will provide the pad to disc clearance required.

In an alternative design when retracted the inner and outer nuts contact an internal piston circlip such that it positively retracts the piston. The clutch will decouple once the torque exceeds that of the clutch and can be used to protect the internal component limits should pressure increase above an undesired pressure/load or during maintenance mode. The circlip inclusion is important for a stand alone system if roll back is not available

An alternative arrangement is illustrated in Figure 5. This comprises a combined service brake and electronic parking brake assembly. This is similar to that of Figures 1 to 4 except that there are passages 1100 provided through the calliper body 1000 which is in fluidic communication with the closed spaced behind each of the inboard and outboard pistons, and in a practical application this passage is connected to a hydraulic service brake circuit as shown in Figure 2. The circuit typically includes a source of hydraulic pressure and a driver operated brake pedal or switch. The fluid is applied to the spaces behind the pistons.

Increasing the pressure of the hydraulic brake fluid in the closed space pushes the end of the pistons out of the closed space to press against the rotor (not shown), and withdrawing fluid pulls it back, assisted by the roll back of the seal as shown in Figure 6. The provision of the roll back seal allows the circlip 97 to be omitted if desired. The exact arrangement of the circuit and the manner in which it operates is not central to this invention, and the skilled person will be aware of many suitable circuits that could be employed within the scope of this invention. As with the first embodiment, the inboard and outboard pistons are also driven to engage and release from the rotor by the actuator 1600 to provide the parking brake function in the same manner as the first embodiment.

The embodiment shown in Figure 6 is a four pot arrangement having two inboard pistons 1200,1300 and two outboard pistons 1400, 1500. All of the pistons are connected to the motor 1600 through a first and second drivetrains in this embodiment including a clutch assembly 1700 and a cross connecting driveshaft 1800. In a modification, the service brake may apply one set of pistons, and the parking brake a different set of pistons with the common calliper body.

## Claims

1. An electronic parking brake for a vehicle comprising:
a calliper body (10) that supports at least one inboard piston (40) and at least one opposing outboard piston (30),
inboard and outboard brake pads (60, 50) respectively associated with the at least one inboard and outboard piston, spaced apart so as to define a gap within which can be located a brake rotor (20) so that the inboard pad faces ones side of the rotor and the opposed outboard pad faces the other side of the rotor, and
an actuator (70) which is connected to the at least one inboard piston through a first drive train (90, 95) and to the at least one outboard piston through a second drive train (100, 110) such that operation of the actuator causes movement of the drive trains and in turn movement of the pistons relative to the calliper body, **characterised in that** the second drive train includes a limiter means that limits the maximum force that can be transmitted from the actuator to the outboard piston.

2. An electronic parking brake according to claim 1 which includes a park brake controller (80) which controls operation of the actuator, in turn controlling the movement of the inboard and outboard pistons.

3. An electronic parking brake according to claim 2 in which the controller comprises an electronic control unit which receives a signal from the park brake switch to apply the brake pads and in response applies drive to the actuator until a desired clamp force has been achieved, the controller includes means for receiving a measure of the current drawn by the actuator, means for converting the current into an estimate of clamp force and means for comparing this with the desired clamp force.

4. An electronic parking brake according to any preceding claim in which the first drive train includes a rotary to linear motion converter (90, 95) that converts rotary motion of an output shaft connected to the actuator to a linear displacement of the at least one inboard piston.

5. An electronic parking brake according to claim 4 in which the first drive train comprises a spindle (90) which is coupled, directly or indirectly, to the output shaft and a nut (95) which moves axially along the spindle as the spindle rotates, the movement of the nut generating linear movement of the piston.

6. An electronic parking brake according to any preceding claim in which the actuator comprises a motor fixed to the inboard side of the calliper (10).

7. An electronic parking brake according to any preceding claim in which the second drive train includes a drive shaft that spans the rotor (20) from the inboard to the outboard side of the calliper

8. An electronic parking brake according to any preceding claim in which the second drive train includes a rotary to linear motion converter that converts rotary motion of an output shaft connected to the actuator to a linear displacement of the at least one inboard piston.

9. An electronic parking brake according to any preceding claim in which the second drive train is higher geared than the first drive train, so that for a given movement of the actuator the at least one outboard piston (30) advances by a greater distance than the inboard piston (40) to ensure that the outboard pad (50) generally engages the rotor before the inboard pad (60).

10. An electronic parking brake according to any preceding claim which is arranged such that with the outboard piston (30) pressing the outboard pad (50) against the brake disc and the inboard piston (40) pressing the inboard pad (60) against the disc, the clamp force reacted by the outboard piston is earthed out to the calliper rather than onto the actuator.

11. An electronic parking brake according to any preceding claim in which the limiter means comprises a ball detent type clutch comprising a drive plate and an opposing reaction plate which are free to rotate about a common axis, a ball bearing being located between the opposed plates in an annular groove in the drive plate which is located concentrically around the common axis, and a spring which acts between the ball bearing and the reaction plate to press the ball into the groove, the groove including a series of changes in width or depth around its length to form a series of adjacent pockets into which the bearing sits thereby to lock the reaction plate and drive plate together preventing relative rotation until a torque is applied across the plates sufficient to compress the spring and cause the ball to move out of the pocket into an adjacent pocket, thereby causing the clutch to slip when the maximum torque is reached.

12. An electronic parking brake according to any preceding claim in which the second drive train includes a decoupling device such as a sprag clutch in series with the limiting means.

13. A combined service brake and parking brake assembly which comprises an electronic park brake according to any one of claims 1 to 12 and further includes an inlet for hydraulic fluid into a closed spaced behind at least one inboard piston and at least one outboard piston whereby in use hydraulic pressure introduced into the closed spaced from a hydraulic brake circuit acts on the underside of each piston to push the piston towards the brake disc so as to apply the service brake.

14. A combined service and park brake according to claim 13 in which a seal is provided around the pistons to prevent the hydraulic fluid escaping between the piston and the calliper body that provides a roll -back function, assisting in drawing the piston back away from the disc whenever the service brake or park brake pressure is released so that the piston does not need to be actively pulled back. Using the roll back is desirable as it helps ensure the piston retracts by a desired, consistent, amount each time.

15. A combined service and park brake assembly according to claim 13 or 14 in which the same pistons that apply pressure during a service brake operation also are used to apply pressure during a park brake operation.

## Patentansprüche

1. Eine elektronische Parkbremse für ein Fahrzeug, die Folgendes aufweist:
einen Bremssattelkörper (10), der mindestens einen Innenkolben (40) und mindestens einen gegenüberliegenden Außenkolben (30) in sich trägt,
Innen- und Außen-Bremsbeläge (60,50), die jeweils mit dem mindestens einen Innen- und Außenkolben verbunden und voneinander getrennt sind, um eine Lücke zu definieren, in der sich eine Bremsscheibe (20) befinden kann, so dass der Innen-Bremsbelag auf der einen Seite der Bremsscheibe liegt und der gegenüberliegende Außen-Bremsbelag auf der anderen Seite der Bremsscheibe liegt, und
einen Aktuator (70), der mit dem mindestens einen Innenkolben über einen ersten Antriebsstrang (90, 95) und mit dem mindestens einen Außenkolben über einen zweiten Antriebsstrang (100, 110) verbunden ist, so dass die Betätigung des Aktuators eine Bewegung der Antriebsstränge auslöst und damit die Bewegung der Kolben im Verhältnis zum Bremssattelkörper, **dadurch gekennzeichnet, dass** der zweite Antriebsstrang eine Begrenzervorrichtung einschließt, die die Höchstkraft begrenzt, die vom Aktuator an den Außenkolben übertragen werden kann.

2. Eine elektronische Parkbremse gemäß Anspruch 1, die eine Parkbremsen-Steuerung (80) einschließt, die den Aktuatorbetrieb und im Gegenzug die Bewegung der Innen- und Außenkolben steuert.

3. Eine elektronische Parkbremse gemäß Anspruch 2, bei der die Steuerung eine elektronische Steuereinheit aufweist, die ein Signal vom Parkbremsenschalter empfängt, um die Bremsbeläge einzusetzen, als Reaktion darauf wird der Aktuator betätigt bis eine gewünschte Anpresskraft erreicht ist, die Steuerung schließt eine Vorrichtung für den Empfang einer Messung des vom Aktuator bezogenen Stroms, eine Vorrichtung für die Umwandlung des Stroms in eine Schätzung der Anpresskraft und eine Vorrichtung für deren Vergleich mit der gewünschten Anpresskraft ein.

4. Eine elektronische Parkbremse gemäß eines der vorhergehenden Ansprüche, bei der der erste Antriebsstrang einen Drehbewegungs- zu Linearbewegungswandler (90, 95) einschließt, der die Drehbewegung einer Ausgangswelle, die mit dem Aktuator verbunden ist, in eine lineare Verschiebung des mindestens einen Innenkolbens umwandelt.

5. Eine elektronische Parkbremse gemäß Anspruch 4, bei der der erste Antriebsstrang eine Spindel (90) aufweist, die, direkt oder indirekt, mit der Ausgangswelle und einer Gewindebüchse (95) gekoppelt ist, die sich axial entlang der Spindel bewegt, wenn sich die Spindel dreht, die Bewegung der Gewindebüchse erzeugt dabei eine lineare Bewegung des Kolbens.

6. Eine elektronische Parkbremse gemäß eines der vorhergehenden Ansprüche, bei der der Aktuator einen Motor aufweist, der an der Innenseite des Bremssattels (10) befestigt ist.

7. Eine elektronische Parkbremse gemäß eines der vorhergehenden Ansprüche, bei der der zweite Antriebsstrang eine Antriebswelle einschließt, die die Bremsscheibe (20) von der Innen- zur Außenseite des Bremssattels überspannt.

8. Eine elektronische Parkbremse gemäß eines der vorhergehenden Ansprüche, bei der der zweite Antriebsstrang einen Drehbewegungs- zu Linearbewegungswandler einschließt, der die Drehbewegung einer Ausgangswelle, die mit dem Aktuator verbunden ist, in eine lineare Verschiebung des mindestens einen Innenkolbens umwandelt.

9. Eine elektronische Parkbremse gemäß eines der vorhergehenden Ansprüche, bei der der zweite Antriebsstrang höher übersetzt ist als der erste Antriebsstrang, so dass für eine gegebene Bewegung des Aktuators der mindestens eine Außenkolben (30) über eine größere Distanz ausfährt als der Innenkolben (40), um sicherzustellen, dass der Außen-Bremsbelag (50) die Bremsscheibe im Allgemeinen vor dem Innen-Bremsbelag (60) erfasst.

10. Eine elektronische Parkbremse gemäß eines der vorhergehenden Ansprüche, die so angeordnet ist, dass, mit dem Außenkolben (30) der Außen-Bremsbelag (50) gegen die Bremsscheibe und mit dem Innenkolben (40) der Innen-Bremsbelag (60) gegen die Bremsscheibe, die Anpresskraft, die vom Außenkolben einwirkt, eher zum Bremssattel als zum Aktuator gerichtet ist.

11. Eine elektronische Parkbremse gemäß eines der vorhergehenden Ansprüche, bei der die Begrenzervorrichtung eine arretierkugelartige Kupplung aufweist, die wiederum eine Antriebsscheibe und eine gegenüberliegende Reaktionsplatte aufweist, die sich frei um eine gemeinsame Achse drehen, ein Kugellager, das sich zwischen den gegenüberliegenden Platten in einer Ringnut auf der Antriebsplatte befindet, die konzentrisch um die gemeinsame Achse verläuft, und eine Feder, die zwischen dem Kugellager und der Reaktionsplatte arbeitet, um die Kugeln in die Nut zu drücken, die Nut schließt dabei eine Reihe von Breiten- und Tiefenänderungen um ihre Länge ein, um eine Reihe von nebeneinanderliegenden Taschen zu bilden, in denen das Kugellager sitzt, um dadurch die Reaktionsplatte und Antriebsplatte miteinander zu verbinden, um eine entsprechende Drehung zu verhindern bis eine Drehkraft auf die Platten angewendet wird, die ausreicht, um die Feder zusammenzudrücken und die Kugeln dazu zu bewegen, sich aus der Tasche heraus- und in die nebenliegende Tasche hineinzubewegen, und dadurch die Kupplung zu veranlassen, zu rutschen, wenn die maximale Drehkraft erreicht ist.

12. Eine elektronische Parkbremse gemäß eines der vorhergehenden Ansprüche, bei der der zweite Antriebsstrang eine Entkopplungsvorrichtung, wie eine Freilaufkupplung, in Reihe mit der Begrenzervorrichtung einschließt.

13. Eine kombinierte Betriebsbremsen- und Parkbremsenanordnung, die eine elektronische Parkbremse gemäß der Ansprüche 1 bis 12 aufweist und darüberhinaus einen Einlass für Hydraulikflüssigkeit in einen geschlossenen Raum hinter dem mindestens einen Innenkolben und dem mindestens einen Außenkolben einschließt, wobei im Betrieb der in den geschlossenen Raum von einem Hydraulikbremskreislauf ausgeübte Hydraulikdruck auf die Unterseite des jeweiligen Kolbens wirkt, um den Kolben zur Bremsscheibe zu drücken und die Betriebsbremse einzusetzen.

14. Eine kombinierte Betriebs- und Parkbremse gemäß Anspruch 13, bei der eine Dichtung um die Kolben angebracht ist, um zu verhindern, dass die Hydraulikflüssigkeit zwischen dem Kolben und dem Bremssattelkörper austreten kann, und die eine Rückholfunktion bietet, die dabei hilft, den Kolben weg von der Bremsscheibe zurückzuziehen, wenn der Betriebsbremsen- oder Parkbremsendruck gelöst wird, so dass der Kolben nicht aktiv zurückgezogen werden muss. Die Verwendung der Rückholfunktion ist wünschenswert, da sie sicherstellt, dass der Kolben sich jeweils um einen gewünschten, konsistenten Weg zurückbewegt.

15. Eine kombinierte Betriebs- und Parkbremsenanordnung gemäß Anspruch 13 oder 14, bei der dieselben Kolben, die den Druck während des Betriebsbremsvorgangs ausüben, auch verwendet werden, um den Druck während des Parkbremsvorgangs auszuüben.

## Revendications

1. Un frein de stationnement électronique pour un véhicule comprenant :
un corps d'étrier (10) qui soutient au moins un piston intérieur (40) et au moins un piston extérieur opposé (30),
des plaquettes de frein intérieure et extérieure (60, 50) respectivement associées aux au moins un piston intérieur et piston extérieur, espacées de façon à définir un espace à l'intérieur duquel un disque de frein (20) peut être installé de sorte que la plaquette intérieure soit tournée vers un côté du disque et la plaquette extérieure opposée soit tournée vers l'autre côté du disque, et
un actionneur (70) qui est raccordé au au moins un piston intérieur par l'intermédiaire d'un premier groupe motopropulseur (90, 95) et au au moins un piston extérieur par l'intermédiaire d'un deuxième groupe motopropulseur (100, 110) de sorte que le fonctionnement de l'actionneur entraîne un déplacement des groupes motopropulseurs et, ensuite, un déplacement des pistons par rapport au corps d'étrier, **caractérisé en ce que** le deuxième groupe motopropulseur comprend un moyen de limitation qui limite la force maximale qui peut être transmise de l'actionneur au piston extérieur.

2. Un frein de stationnement électronique selon la Revendication 1 qui comprend un dispositif de commande de frein de stationnement (80) qui commande le fonctionnement de l'actionneur, qui commande à son tour le déplacement des pistons intérieur et extérieur.

3. Un frein de stationnement électronique selon la Revendication 2 dans lequel le dispositif de commande comprend une unité de commande électronique qui reçoit un signal à partir du commutateur de frein de stationnement destiné à l'application des plaquettes de frein et, en réponse, applique un entraînement à l'actionneur jusqu'à ce qu'une force de serrage souhaitée soit atteinte, le dispositif de commande comprend un moyen de réception d'une mesure du courant consommé par l'actionneur, un moyen de conversion du courant en une estimation de la force de serrage et un moyen de comparaison de celle-ci à la force de serrage souhaitée.

4. Un frein de stationnement électronique selon l'une quelconque des Revendications précédentes dans lequel le premier groupe motopropulseur comprend un convertisseur de mouvement rotatif à linéaire (90, 95) qui convertit un mouvement rotatif d'un arbre de sortie raccordé à l'actionneur en un déplacement linéaire du au moins un piston intérieur.

5. Un frein de stationnement électronique selon la Revendication 4 dans lequel le premier groupe motopropulseur comprend une tige (90) qui est couplée, directement ou indirectement, à l'arbre de sortie et un écrou (95) qui se déplace axialement le long de la tige à mesure que la tige pivote, le déplacement de l'écrou générant un déplacement linéaire du piston.

6. Un frein de stationnement électronique selon l'une quelconque des Revendications précédentes dans lequel l'actionneur comprend un moteur fixé au côté intérieur de l'étrier (10).

7. Un frein de stationnement électronique selon l'une quelconque des Revendications précédentes dans lequel le deuxième groupe motopropulseur comprend un arbre d'entraînement qui recouvre le disque (20) du côté intérieur au côté extérieur de l'étrier.

8. Un frein de stationnement électronique selon l'une quelconque des Revendications précédentes dans lequel le deuxième groupe motopropulseur comprend un convertisseur de mouvement rotatif à linéaire qui convertit un mouvement rotatif d'un arbre de sortie raccordé à l'actionneur en un déplacement linéaire du au moins un piston intérieur.

9. Un frein de stationnement électronique selon l'une quelconque des Revendications précédentes dans lequel le deuxième groupe motopropulseur est engrené plus haut que le premier groupe motopropulseur, de sorte que, pour un déplacement donné de l'actionneur, le au moins un piston extérieur (30) avance d'une distance plus grande que le piston intérieur (40) de façon à garantir que la plaquette extérieure (50) entre généralement en prise avec le disque avant la plaquette intérieure (60).

10. Un frein de stationnement électronique selon l'une quelconque des Revendications précédentes qui est agencé de sorte que, avec le piston extérieur (30) pressant la plaquette extérieure (50) contre le disque de frein et le piston intérieur (40) pressant la plaquette intérieure (60) contre le disque, la force de serrage renvoyée par le piston extérieur est reliée à l'étrier plutôt qu'à l'actionneur.

11. Un frein de stationnement électronique selon l'une quelconque des Revendications précédentes dans lequel le moyen de limitation comprend un embrayage de type à détente à bille comprenant une plaque d'entraînement et une plaque de réaction opposée qui pivotent librement autour d'un axe commun, un roulement à billes étant placé entre les plaques opposées dans une rainure annulaire dans la plaque d'entraînement qui est placée concentriquement autour de l'axe commun, et un ressort qui agit entre le roulement à billes et la plaque de réaction de façon à presser la bille dans la rainure, la rainure comprenant une série de modifications en largeur ou en profondeur autour de sa longueur de façon à former une série de poches adjacentes dans lesquelles le roulement repose, verrouillant ainsi la plaque de réaction et la plaque d'entraînement l'une à l'autre, empêchant une rotation relative jusqu'à ce qu'un couple soit appliqué sur les plaques suffisant pour comprimer le ressort et amener la bille à sortir de la poche vers une poche adjacente, amenant ainsi l'embrayage à glisser lorsque le couple maximum est atteint.

12. Un frein de stationnement électronique selon l'une quelconque des Revendications précédentes dans lequel le deuxième groupe motopropulseur comprend un dispositif de découplage tel qu'un embrayage à béquille en série avec le moyen de limitation.

13. Un ensemble frein de service et frein de stationnement combiné qui comprend un frein de stationnement électronique selon l'une quelconque des Revendications 1 à 12 et comprend en outre une admission pour un fluide hydraulique dans un espace fermé derrière au moins un piston intérieur et au moins un piston extérieur grâce à quoi, en utilisation, une pression hydraulique introduite dans l'espace fermé à partir d'un circuit de frein hydraulique agit sur le côté inférieur de chaque piston de façon à pousser le piston vers le disque de frein de façon à appliquer le frein de service.

14. Un frein de service et un frein de stationnement combinés selon la Revendication 13 dans lequel un joint d'étanchéité est placé autour des pistons de façon à empêcher le fluide hydraulique de s'échapper entre le piston et le corps d'étrier qui fournit une fonction de recul, aidant au retrait vers l'arrière du piston à l'écart du disque chaque fois que la pression du frein de service ou du frein de stationnement est libérée de sorte que le piston n'a pas besoin d'être tiré activement vers l'arrière. L'utilisation de la fonction de recul est souhaitable dans la mesure où elle aide à garantir que le piston recule d'une quantité souhaitée et constante à chaque fois.

15. Un ensemble frein de service et frein de stationnement combiné selon la Revendication 13 ou 14 dans lequel les mêmes pistons que ceux qui appliquent une pression au cours d'un actionnement de frein de service sont également utilisés pour l'application d'une pression au cours d'un actionnement du frein de stationnement.
